# EUROPÄISCHE PATENTSCHRIFT

(11) **EP 0 656 845 B1**
(45) Veröffentlichungstag und Bekanntmachung des Hinweises auf die Patenterteilung: **16.04.1997**
(21) Anmeldenummer: 93919181.3
(22) Anmeldetag: 26.08.1993
(51) Int. Cl.: B60S 1/34, B60S 1/24, F16C 9/00, B29C 45/14, B29C 65/00, B29C 70/76

(54) **VERFAHREN ZUM AXIALEN FIXIEREN EINER WELLE IN DEREN LAGERGEHÄUSE BEI WISCHERANLAGEN, SOWIE WISCHERANLAGE, INSBESONDERE ZUR SCHEIBENREINIGUNG DES KRAFTFAHRZEUGS**
PROCESS FOR AXIALLY SECURING A SHAFT IN ITS BEARING HOUSING IN WINDSHIELD WIPERS, AS WELL AS WINDSHIELD WIPER, IN PARTICULAR FOR CLEANING MOTOR VEHICLE WINDSHIELDS
PROCEDE DE FIXATION AXIALE D'UN ARBRE DANS SON LOGEMENT DE PALIER DANS DES ESSUIE-GLACES, AINSI QU'ESSUIE-GLACE, NOTAMMENT POUR LE NETTOYAGE DE VITRES DE VEHICULES A MOTEUR

(30) Priorität: 04.09.1992 DE 4229496
(43) Veröffentlichungstag der Anmeldung: 14.06.1995
(73) Patentinhaber: ITT Automotive Europe GmbH, 60488 Frankfurt am Main (DE)
(72) Erfinder: HEHL, Thomas, D-74321 Bietigheim-Bissingen (DE); PROHASKA, Hans, D-72108 Rottenburg 4 (DE)
(74) Vertreter: Portwich, Peter
(86) Internationale Anmeldenummer: EP9302299
(87) Internationale Veröffentlichungsnummer: WO9405532

(56) Entgegenhaltungen:
- EP-A- 0 187 965
- DE-A- 3 637 462
- GB-A- 873 525
- GB-A- 2 088 707

## Beschreibung

Die Erfindung betrifft ein Verfahren zum axialen Fixieren einer Welle in deren Lagergehäuse bei Wischeranlagen, insbesondere zur Scheibenreinigung eines Kraftfahrzeugs, wobei der aus dem Lagergehäuse axial heraustretende Wellenabschnitt der Welle mit einer Ringnut versehen ist. Die Erfindung betrifft außerdem eine Wischeranlage mit einer Antriebsvorrichtung und einem mit Antriebsvorrichtung gekoppelten Gelenkgetriebe, wobei die Antriebsvorrichtung und/oder das Gelenkgetriebe wenigstens eine in einem Gehäuse gelagerte, rotierende oder pendelnde Welle aufweist und die Welle das Gehäuse wenigstens einseitig mit einem Wellenabschnitt überragt, wobei der Wellenabschnitt eine Ringnut aufweist.

Mit der DE 40 28 892 A1 ist eine Antriebsvorrichtung, insbesondere für Scheibenwischer an Kraftfahrzeugen bekannt geworden, die eine aus einer Stirnseite des Lagergehäuses heraustretende Welle aufweist, wobei die Welle mit einer Radialnut versehen ist. Zwischen der Welle und dem Lagergehäuse befindet sich außerdem ein Ringspalt. Die axiale Fixierung der Welle am Lagergehäuse erfolgt über eine am Lagergehäuse festsitzende, aus elastischem Kunststoff gefertigte Buchse, die in den Ringspalt eingeschoben ist. Außerdem besitzt die Buchse einen radial nach innen vorspringenden Dichtflansch, der in die Ringnut der Welle eingreift. Diese Buchse ersetzt den sonst üblichen Sicherungs- oder C-Ring, der in die Ringnut eingesetzt wird und über den die Welle am Lagergehäuse fixiert wird.

Bei der eingangs genannten Antriebsvorrichtung muß die Bohrung des Lagergehäuses, der Durchmesser der Welle und die Ausrichtung der Welle bzgl. des Lagergehäuses exakt aufeinander abgestimmt sein, so daß die hochgenau gefertigte Buchse mit geringem Spiel in den Ringspalt zwischen die Welle und dem Lagergehäuse eingesetzt werden kann. Wird das Spiel zu gering bemessen, so läßt sich die Buchse nicht mehr einsetzen und bei zu großem Spiel besteht die Gefahr, daß Feuchtigkeit von außen in die Wellenlagerung eindringt und Schäden herbeiführt. Auch bei nicht koaxialer Ausrichtung der Welle bzgl. dem Lagergehäuse ist ein Einsetzen der Buchse nicht möglich. Wird die Welle für das Einsetzen der Buchse unter Krafteinwirkung ausgerichtet, die Buchse eingesetzt und anschließend die die Welle ausrichtende Kraft entfernt, entstehen zwischen der Welle und der Buchse partiell hohe Drücke, die zu einem erhöhten Verschleiß führen, was u.U. einen vorzeitigen Funktionsausfall zur Folge hat.

Der Erfindung liegt daher die Aufgabe zugrunde, ein Verfahren sowie eine Wischeranlage der eingangs genannten Art bereitzustellen, bei denen die Welle auf einfache Art und Weise axial im Lagergehäuse gelagert werden kann, wobei die Gefahr eines vorzeitigen Ausfalls verringert sein soll.

Diese Aufgabe wird bei dem eingangs genannten Verfahren erfindungsgemäß dadurch gelöst, daß nach dem Einsetzen und ggf. nach dem Ausrichten der Welle in deren Lagergehäuse die Ringnut wenigstens abschnittsweise mit einem plastifizierten Kunststoffmaterial oder Metall umspritzt wird.

Beim erfindungsgemäßen Verfahren wird also der das Lagergehäuse überragende Wellenabschnitt nach dem Einsetzen der Welle in das Lagergehäuse mit einem plastifizierten und aushärtenden Material umspritzt. Dieses plastifizierte Material kann entweder ein Kunststoffmaterial oder ein Metall sein. Dabei dringt das Material in die Ringnut der Welle ein und liegt außerdem am stirnseitigen Ende des Lagergehäuses an. Hierdurch wird die Welle axial bzgl. des Lagergehäuses fixiert. Nachdem das Material erhärtet ist, dient dieses sowohl als Lagerung für die Welle als auch als Dichtung gegen ein Eindringen von Schmutz und Feuchtigkeit aus der Umgebung in die Lagerstelle bzw. gegen ein Austreten von Schmiermittel aus der Lagerstelle. Das erfindungsgemäße Verfahren hat den Vorteil, daß weder die Bohrung des Lagegehäuses, noch der Durchmesser der Welle zur Bildung eines exakt definierten Ringspalts maßlich hochgenau gefertigt sein müssen, außerdem kann der Abstand der Radialnut der Welle zur Stirnfläche des Lagergehäuses beliebig gewählt werden und schließlich ist eine koaxiale Ausrichtung der Welle bzgl. der Bohrung des Lagergehäuses nicht erforderlich. Es werden für die axiale Fixierung der Welle außerdem keine hochgenauen Bauteile wie einzuschiebende Buchsen oder dgl. benötigt. Die Herstellung der erfindungsgemäßen Wellenfixierung ist schnell und einfach auszuführen. Zwar wird die Welle nach dem Einsetzen in das Lagergehäuse in der Regel ausgerichtet, d.h. zentriert, jedoch ist dieser Vorgang nicht unbedingt erforderlich. Durch das eingespritzte Material kann die Welle auch in versetzten bzw. gekippten Positionen im Lagergehäuse fixiert werden. Ein weiterer Vorteil des erfindungsgemäßen Verfahrens wird darin gesehen, daß die Innenform des Lagergehäuses auch konisch ausgestaltet sein kann, was insbesondere für gegossene Gehäuse von Vorteil ist. Ferner muß die Innenform nach der Herstellung des Lagergehäuses nicht nachbearbeitet, insbesondere auf ein vorbestimmtes Maß aufgeweitet werden. Insbesondere bei aus Aluminium-Druckguß hergestellten Lagergehäusen sind trotz erheblichen Abmessungstoleranzen, die durch das Erkalten des Lagergehäuses bedingt sind, keine mechanischen Nachbearbeitungen erforderlich.

Um ein definiertes Spiel zwischen der Welle und dem ausgehärteten Kunststoffmaterial bzw. Metall zu erhalten, wird die Welle vor dem Umspritzen, insbesondere auf eine Temperatur von 200°C, +/- 30°C erwärmt. Da das Material nach dem Umspritzen schneller erhärtet als die Welle abkühlt, wird durch das Schrumpfmaß der Welle ein definiertes Spiel erzeugt, durch welches eine leichtgängige Drehbarkeit der Welle gewährleistet ist. Wird ein strammer Sitz des erkalteten Materials auf der Welle gewünscht, so kann in diesem Falle die Welle vor dem Umspritzen auf eine unterhalb der Raumtemperatur bzw. Betriebstemperatur liegende Temperatur abgekühlt werden.

Vorteilhaft wird das Kunststoffmaterial bzw. das Metall axial und/oder radial an den Wellenabschnitt angepritzt. Abhängig von der Form und Zugänglichkeit des Wellenabschnitts sowie von dessen Länge und dem verwendeten Kunststoffmaterial bzw. Metall wird dieses entweder radial angespritzt, wobei es nach beiden Seiten gepreßt wird oder es erfolgt eine axiale Anspritzung, die insbesondere dann von Vorteil ist, wenn der Wellenabschnitt seitlich nicht oder nur schwer zugänglich ist.

Bei einer Weiterbildung ist vorgesehen, daß verschiedene Kunststoffmaterialien oder Metalle gleichzeitig oder nacheinander an den Abschnitt angespritzt werden. Dabei können z.B. für niedrigen Reibwert, für eine gute Abdichtung, für eine hohe Widerstandsfestigkeit gegen bestimmte Stoffe, z.B. Fette, Öle, Wasser oder agressive Medien geeignete Materialien verwendet werden. Diese können dann über entsprechende Angußöffnungen nacheinander oder gleichzeitig an den Wellenabschnitt angespritzt werden. Auf diese Weise können die Eigenschaften der unterschiedlichen Materialien kombiniert werden.

Um ein Austreten des an den Wellenabschnitt angespritzten Kunststoffmaterials bzw. Metalls aus dem Formraum zu verhindern, wird der Wellenabschnitt wenigstens teilweise während des Anspritzvorganges mittels eines Werkzeugs um- und/oder übergriffen, derart daß zwischen dem Werkzeug und dem Wellenabschnitt ein Hohlraum gebildet wird. Über dieses Werkzeug kann das plastifizierte Material vorteilhaft um die Stirnseite des Lagergehäuses herumgelenkt werden, so daß eine Verankerung des Materials am Lagergehäuse und ein axiales Verrutschen sowie ein Mitdrehen in Umfangsrichtung vermieden wird.

Eine Fixierung des Kunststoffmaterials bzw. Metalls in Umfangsrichtung am Lagergehäuse wird vorteilhaft dadurch erzielt, daß das Material in an der Außenseite des axialen Endes des Lagergehäuses vorgesehene Ausnehmungen eingespritzt wird. Diese Ausnehmungen können auch Hinterschneidungen aufweisen und sind insbesondere schwalbenschwanzförmig ausgeführt. Hierdurch wird außerdem eine weitere Sicherung gegen ein Eindringen von Schmutz und Feuchtigkeit in die Wellenlagerung geschaffen.

Bevorzugt wird die Welle solange über ein zusätzliches Werkzeug bzgl. des Lagergehäuses fixiert, bis das Kunststoffmaterial bzw. das Metall ausgehärtet ist. Hierdurch wird sichergestellt, daß das Axialspiel in der Welle im Lagergehäuse ein bestimmtes Maß nicht überschreitet.

Bei einer Weiterbildung ist vorgesehen, daß der zwischen der Welle und dem Lagergehäuse sich befindende Ringspalt wenigstens während der Umspritzung abgedichtet wird. Hierdurch wird verhindert, daS Kunststoffmaterial oder Metall in den Ringspalt eindringt. Ferner wird durch die Abdichtung die Möglichkeit geschaffen, daß das um den Wellenabschnitt herumzuspritzende Material solange unter Druck gehalten werden kann, bis es ausgehärtet ist. Hierdurch wird eine weitere Verbesserung der Dichtigkeit erhalten.

Die oben genannte Aufgabe wird bei einer Wischeranlage der eingangs genannten Art erfindungsgemäß dadurch gelöst, daß die Ringnut wenigstens abschnittsweise mit einem Kunststoffmaterial oder Metall umspritzt ist.

Mit dieser erfindungsgemäßen Ausgestaltung werden die o.g. Vorteile erzielt.

Die Reibung zwischen der Welle und dem Kunststoffmaterial bzw. Metall kann vorteilhaft dadurch verhindert werden, daß das Material mit einem Gleitmittelzusatz versehen ist. Dies können metallische Zusätze, Kunststoffe oder Zusätze in flüssiger Form sein.

Bei einem bevorzugten Ausführungsbeispiel weist der Wellenabschnitt mehrere, insbesondere vier Ringnuten auf. Dies hat den Vorteil, daß durch die Vielzahl von Ringnuten eine Art Labyrinthdichtung geschaffen wird, die eine Eindringen von Schmutz und Feuchtigkeit in die Wellenlagerung weitestgehend verhindert. Ferner wird durch die Vielzahl von Ringnuten die an der Welle angreifende Axialkraft gleichmäßig verteilt und über einen großen Bereich in das die Ringnuten umgebende Material eingeleitet. Eine Beschädigung der Axiallagerung der Welle durch axiale Kraftspitzen auf diese Weise vermindert.

Vorteilhaft ist die Breite der Ringnuten größer als deren Abstand zueinander. Demnach ist die Breite der in die Ringnuten eingreifenden Abschnitte des Materials ebenfalls relativ breit, wodurch ein Ausreißen dieser Abschnitte insbesondere bei axialen Kraftspitzen noch weiter verringert wird. Dies ist insbesondere bei der Verwendung eines Kunststoffmaterials von Vorteil, da auf diese Weise relativ dickwandige Abschnitte geschaffen werden.

Insbesondere bei schnellaufenden Wellen werden in der Axiallagerung durch Reibung entstehende örtliche Temperaturspitzen dadurch vermieden, daß die Ringnut abgerundete Innenkanten aufweist. Hierdurch wird vermieden, daß das in die Ringnut eindringende Material scharfe Kanten besitzt, die sich örtlich übermäßig erwärmen können.

Ein Eindringen von Material in den Ringspalt zwischen der Welle und dem Lagergehäuse wird vorteilhaft dadurch vermieden, daß dieser Ringspalt z.B. mittels einer die Welle umgreifenden und auf der Stirnseite des Lagergehäuses aufliegenden Scheibe abgedichtet ist.

Eine Beschädigungsgefahr des Axiallagers wird vorteilhaft dadurch vermieden, daß die Außenfläche des umgespritzten Kunststoffmaterials bzw. Metalls in Richtung auf das Wellenende insbesondere konisch abgeschrägt ist. Diese Abschrägung hat außerdem den Vorteil, daß das Axiallager im Bereich des abgeschrägten Endes aufgrund der verminderten Masse ein geringeres Spiel bezüglich des Wellenumfangs aufweist, wodurch eine verbesserte Abdichtung erzielt wird.

Bevorzugt ist das Kunststoffmaterial ein Thermoplast, insbesondere ein Polyamid z.B. Polyamid 6/12, oder ein Duroplast, bzw. das Metall eine Kupfer-, Blei- und/oder Zinnlegierung. Bei der Verwendung eines thermoplastischen Kunststoffes wird dieser durch Erwärmung plastifiziert und um den Wellenabschnitt herumgespritzt. Die Wischerwelle wird gegenüber dem Lagergehäuse durch Hilfswerkzeuge solange axial fixiert, bis der umgespritzte thermoplastische Kunststoff bzw. das Metall abgekühlt und ausgehärtet ist. Bei der Verwendung eines Duroplasts wird dieser z.B. durch Zusatz eines Härters aktiviert und in plastischem Zustand verarbeitet. Insbesondere durch Zufuhr von Wärme wird der Duroplast ausgehärtet und fixiert die Welle. Die Zufuhr von Wärme an den Duroplast kann z.B. durch eine angewärmte Welle erfolgen.

Vorteilhaft bildet das Kunststoffmaterial bzw. das Metall in ausgehärtetem Zustand eine Axiallagerung und eine Abdichtung für die Welle. Es bedarf, wie bereits erwähnt, keiner weiteren Bauteile für die Lagerungs- und Dichtfunktionen.

Bevorzugt ist die Außenfläche des Lagergehäuses im Bereich dessen axialen Endes mit Ausnehmungen versehen, die vom Kunststoffmaterial bzw. Metall ausgespritzt sind. Diese Formänderungen des Lagergehäuses bieten für das Material Verankerungspunkte, so daß dieses einerseits fest mit dem Lagergehäuse verbunden ist, andererseits die Welle in axialer Richtung starr vom Kunststoffmaterial bzw. Metall gehalten wird.

Eine weitere Optimierung der Abdichtung kann dadurch erzielt werden, daß im Kunststoffmaterial bzw. im Metall zusätzlich Dichtungen, wie O-Ringe oder dgl. integriert sind. In diesem Fall kann für das Kunststoffmaterial z.B. ein Material für ein optimales Gleitreibungsverhältnis verwendet werden, wobei eine optimale Abdichtung z.B. über den O-Ring erzielt wird, der in das Kunststoffmaterial eingespritzt, d.h. integriert ist. Auf diese Weise können die Eigenschaften des O-Rings und die Eigenschaften des Kunststoffmaterials kombiniert werden.

Bei Ausführungsformen ist vorgesehen, daß die Welle eine Abtriebswelle eines Wischermotors ist. Bei einer anderen Ausführungsform ist die Welle die eines Wischlagers. Bei diesen Ausführungsformen ist das Lagergehäuse das Gehäuse des Wischermotors bzw. dessen Getriebes und beim Wischlager wird das Lagergehäuse von der die Welle aufnehmende Lagerbuchse gebildet.

Weitere Vorteile, Merkmale und Einzelheiten der Erfindung ergeben sich aus den Unteransprüchen sowie aus der nachfolgenden Beschreibung, in der unter Bezugnahme auf die Zeichnung ein besonders bevorzugtes Ausführungsbeispiel im einzelnen beschrieben wird. Dabei zeigen:
- Figur 1: eine Seitenansicht eines Wischlagers;
- Figur 2: einen vergrößerten Ausschnitt II gemäß Fig. 1; und
- Figur 3: die Wischerwelle des Wischlagers gemäß Fig. 1.

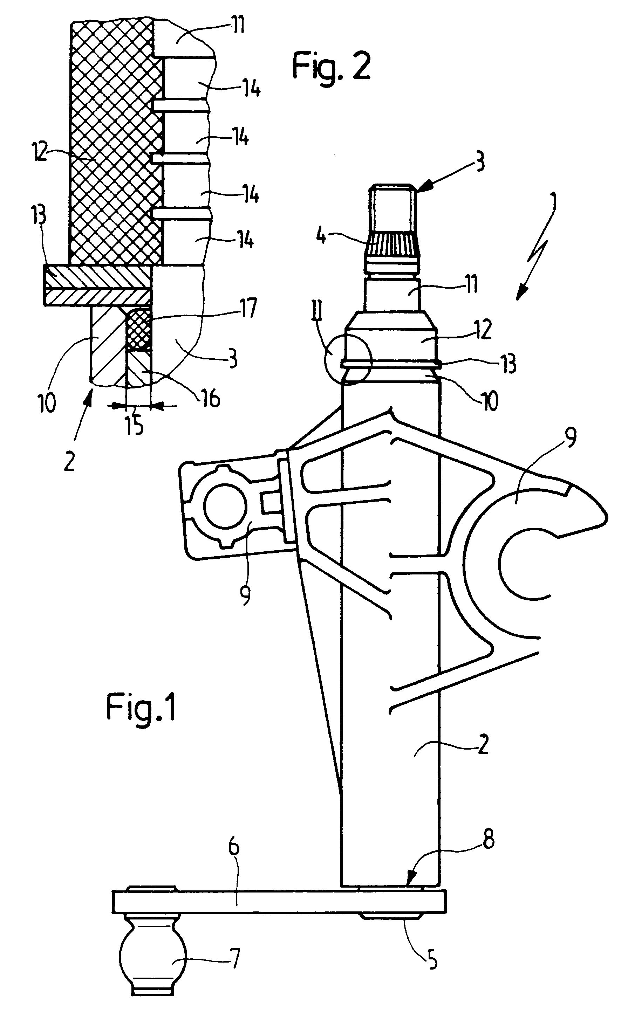

In der Fig. 1 ist ein insgesamt mit 1 bezeichnetes Wischlager wiedergegeben, bei dem in einem Lagergehäuse 2 eine Wischerwelle 3 drehbar oder pendelnd gelagert ist. An dem einem Rändelkonus 4 gegenüberliegenden Ende 5 der Wischerwelle 3 ist ein Lenker 6 mit aufgepreßtem Kugelbolzen 7 zur Krafteinleitung bzw. zur Einleitung der Schwenkbewegung angeordnet. Zwischen dem Lenker 6 und dem stirnseitigen unteren Ende des Lagergehäuses 2 ist eine Scheibe 8 eingesetzt, über die das Längsspiel der Wischerwelle 3 im Lagergehäuse 2 auf z.B. maximal 0,3 mm eingestellt werden kann. Bevorzugt wird die Wischerwelle 3 über die Scheibe 8 in axialer Richtung geringfügig federnd abgestützt. Im übrigen weist das Lagergehäuse 2 Befestigungsvorrichtungen 9 zum Fixieren z.B. an einer Kraftfahrzeugkarosserie auf.

Die Wischerwelle 3 überragt das Lagergehäuse 2 am oberen stirnseitigen Ende 10 mit einem Wellenabschnitt 11, der abschnittsweise von einem Kunststoffmaterial 12 oder einem Metall umspritzt ist. Zwischen dem oberen stirnseitigen Ende 10 und dem Kunststoffmaterial 12 sind ein oder mehrere Scheiben 13 eingesetzt. Über das Kunststoffmaterial 12, welches den Wellenabschnitt 11 umgreift, wird die Wischerwelle 3 axial im Lagergehäuse 2 fixiert.

Die Fig. 2 zeigt den Ausschnitt II der Fig. 1 in vergrößertem Maßstab. Dabei ist erkennbar, daß der Wellenabschnitt 11 mit vier hintereinander angeordneten Ringnuten 14 versehen ist. Dabei schließt die untere Ringnut 14 vorteilhaft bündig mit der Oberfläche der obersten Scheibe 13 ab. Das Kunststoffmaterial 12, welches um den Wellenabschnitt 11 herumgespritzt ist, liegt bündig auf der Oberfläche der obersten Scheibe 13 auf und greift in die Ringnuten 14 ein. Eine optimale Verankerung des Wellenabschnitts 11 im Kunststoffmaterial 12 wird dadurch erzielt, daß die Ringnuten in Bezug auf ihren gegenseitigen Abstand eine große Breite aufweisen. Der in die Ringnuten 14 eingreifende Teil des Kunststoffmaterials 12 besitzt dadurch ebenfalls eine große Breite, so daß auch extrem hohe axiale Kräfte von der Wischerwelle 3 auf das Kunststoffmaterial 12 übertragen werden können, ohne daß ein Versagen durch Ausreißen zu befürchten ist.

In Fig. 2 ist ferner erkennbar, daß die Scheiben 13 auf dem oberen stirnseitigen Ende 10 des Lagergehäuses 2 aufliegen, und daß zwischen dem Lagergehäuse 2 und der Welle 3 ein Ringspalt vorgesehen ist, in dem eine Lagerbuchse 16 zur Lagerung der Wischerwelle 3 und ein Dichtring 17 angeorndet sind.

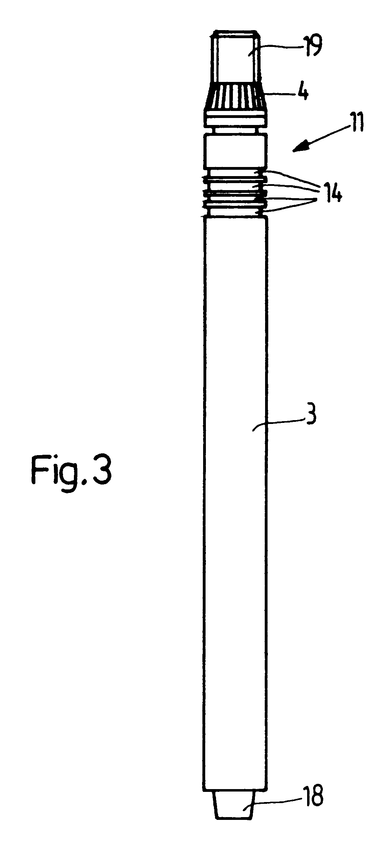

In der Fig. 3 ist die Wischerwelle 3 der Fig. 1 vor dem Einbau ins Lagergehäuse 2 dargestellt. Zu erkennen ist der Aufnahmezapfen 18 am unteren Ende der Wischerwelle 3, auf den der Lenker 6 z.B. aufgenietet wird. Ferner sind die Ringnuten 14 am oberen Wellenabschnitt 11 erkennbar, die bei eingebauter Wischerwelle 3 das Lagergehäuse 2 überragen. Schließlich sind noch der Rändelkonus 4 und das Schraubgewinde 19 zur Aufnahme und Fixierung eines Befestigungsteils eines Wischerarms dargestellt.

Die Zeichnung zeigt ein Ausführungsbeispiel, bei dem eine Wischerwelle 3 in einem Lagergehäuse 2 über ein Kunststoffmaterial 12 axial fixiert ist.

## Patentansprüche

1. Verfahren zum axialen Fixieren einer Welle (3) in deren Lagergehäuse (2) bei Wischeranlagen, insbesondere zur Scheibenreinigung eines Kraftfahrzeugs, wobei der an dem Lagergehäuse (2) axial herausragende Abschnitt (11) der Welle (3) mit einer Ringnut (14) versehen ist, **dadurch gekennzeichnet,** daß nach dem Einsetzen und ggf. nach dem Ausrichten der Welle (3) in deren Lagergehäuse (2) die Ringnut (14) wenigstens abschnittsweise mit einem plastifizierten Kunststoffmaterial (12) oder Metall umspritzt wird.

2. Verfahren nach Anspruch 1, dadurch gekennzeichnet, daß die Welle (3) vor dem Umspritzen insbesondere auf eine Temperatur von 200°C +/- 30°C erwärmt wird.

3. Verfahren nach Anspruch 1 oder 2, dadurch gekennzeichnet, daß das Kunststoffmaterial (12) bzw. das Metall axial und/oder radial an den Abschnitt (11) angespritzt wird.

4. Verfahren nach einem der vorhergehenden Ansprüche, dadurch gekennzeichnet, daß verschiedene Kunststoffmaterialien (12) oder Metalle gleichzeitig oder nacheinander an den Abschnitt (11) angespritzt werden.

5. Verfahren nach einem der vorhergehenden Ansprüche, dadurch gekennzeichnet, daß der Abschnitt (11) wenigstens teilweise während des Anspritzvorganges mittels eines Werkzeugs um- und/oder übergriffen wird, derart, daß zwischen dem Werkzeug und dem Abschnitt (11) ein Hohlraum gebildet wird.

6. Verfahren nach einem der vorhergehenden Ansprüche, dadurch gekennzeichnet, daß das Kunststoffmaterial (12) bzw. das Metall wenigstens teilweise um das axiale Ende (10) des Lagergehäuses (2) herumgespritzt wird.

7. Verfahren nach einem der vorhergehenden Ansprüche, dadurch gekennzeichnet, daß das Kunststoffmaterial (12) bzw. das Metall in an der Außenseite des axialen Endes (10) des Lagergehäuses (2) vorgesehene Ausnehmungen eingespritzt wird.

8. Verfahren nach einem der vorhergehenden Ansprüche, dadurch gekennzeichnet, daß die Welle (3) solange mittels eines zusätzlichen Werkzeugs bzgl. des Lagergehäuses (2) fixiert wird, bis das Kunststoffmaterial (12) bzw. das Metall ausgehärtet ist.

9. Verfahren nach einem der vorhergehenden Ansprüche, dadurch gekennzeichnet daß der zwischen der Welle (3) und dem Lagergehäuse (2) sich befindende Ringspalt (15) wenigstens während der Umspritzung abgedichtet wird.

10. Wischeranlage, hergestellt insbesondere nach einem Verfahren der vorhergehenden Ansprüche und insbesondere zur Scheibenreinigung eines Kraftfahrzeugs, mit einer Antriebsvorrichtung und einem mit der Antriebsvorrichtung gekoppelten Gelenkgetriebe, wobei die Antriebsvorrichtung und/oder das Gelenkgetriebe wenigstens eine in einem Gehäuse (2) gelagerte, rotierende oder pendelnde Welle (3) aufweist und die Welle (3) das Gehäuse (2) wenigstens einseitig mit einem Wellenabschnitt (11) überragt, wobei der Wellenabschnitt (11) eine Ringnut (14) aufweist, **dadurch gekennzeichnet,** daß die Ringnut (14) wenigstens abschnittsweise mit einem Kunststoffmaterial (12) oder Metall umspritzt ist.

11. Wischeranlage nach Anspruch 10, dadurch gekennzeichnet, daß das Kunststoffmaterial (12) oder das Metall mit einem Gleitmittelzusatz versehen ist.

12. Wischeranlage nach Anspruch 10 oder 11, dadurch gekennzeichnet, daß der Wellenabschnitt (11) mehrere insbesondere vier Ringnuten (14) aufweist.

13. Wischeranlage nach Anspruch 12, dadurch gekennzeichnet, daß die Breite der Ringnuten (14) größer als deren Abstand zueinander ist.

14. Wischeranlage nach einem der Ansprüche 10 bis 13, dadurch gekennzeichnet, daß die Ringnut (14) abgerundete Innenkanten aufweist.

15. Wischeranlage nach einem der Ansprüche 10 bis 14, dadurch gekennzeichnet, daß der zwischen dem Lagergehäuse (2) und der Welle (3) sich befindende Ringspalt (15) z.B. mittels einer die Welle (3) umgreifenden und auf der Stirnseite (10) des Lagergehäuses (2) aufliegenden Scheibe (13) abgedichtet ist.

16. Wischeranlage nach einem der Ansprüche 10 bis 15, dadurch gekennzeichnet, daß die Außenfläche des umgespritzten Kunststoffmaterials (12) bzw. Metalls in Richtung auf das Wellenende insbesondere konisch abgeschrägt ist.

17. Wischeranlage nach einem der Ansprüche 10 bis 16, dadurch gekennzeichnet, daß das Kunststoffmaterial (12) ein Thermoplast, insbesondere ein Polyamid, z.B. Polyamid 6/12, oder ein Duroplast ist, bzw. das Metall eine Kupfer-, Blei- und/oder Zinnlegierung ist.

18. Wischeranlage nach einem der Ansprüche 10 bis 17, dadurch gekennzeichnet, daß das Kunststoffmaterial (12) bzw. das Metall in ausgehärtetem Zustand eine Axiallagerung und eine Abdichtung für die Welle (3) bildet.

19. Wischeranlage nach einem der Ansprüche 10 bis 18, dadurch gekennzeichnet, daß die Außenfläche des Lagergehäuses (2) im Bereich dessen axialen Endes (10) mit Ausnehmungen versehen ist, die vom Kunststoffmaterial (12) bzw. Metall ausgespritzt sind.

20. Wischeranlage nach einem der Ansprüche 10 bis 19, dadurch gekennzeichnet, daß im Kunststoffmaterial (12) bzw. Metall zusätzliche Dichtungen, wie O-Ringe oder dgl. integriert sind.

21. Wischeranlage nach einem der Ansprüche 10 bis 20, dadurch gekennzeichnet, daß die Welle (3) eine Abtriebswelle eines Wischermotors, die Welle eines Wischlagers oder dgl. ist.

## Claims

1. A method of fixating a shaft (3) axially in its bearing casing (2) in wiper installations, in particular for cleaning the windscreen of an automotive vehicle, with the portion (11) of the shaft (3) which axially projects out of the bearing casing (2) being provided with an annular groove (14),
characterized in that after insertion and, possibly, after alignment of the shaft (3) in its bearing casing (2), the annular groove (14) is at least sectionally injection-moulded around with a plastified plastic material (12) or metal.

2. A method as claimed in claim 1,
characterized in that the shaft (3) is heated before injection moulding, in particular up to a temperature of 200°C ± 30°C.

3. A method as claimed in claim 1 or in claim 2,
characterized in that the plastic material (12) or the metal is injected axially and/or radially onto the portion (11).

4. A method as claimed in any one of the preceding claims,
characterized in that different plastic materials (12) or metals are injected onto the portion (11) simultaneously or in succession.

5. A method as claimed in any one of the preceding claims,
characterized in that, during injection moulding, the portion (11) is at least partially embraced and/or overlapped by means of a tool so that a hollow space is formed between the tool and the portion (11).

6. A method as claimed in any one of the preceding claims,
characterized in that the plastic material (12) or the metal is at least partially injected around the axial end (10) of the bearing casing (2).

7. A method as claimed in any one of the preceding claims,
characterized in that the plastic material (12) or the metal is injected into recesses provided on the outside of the axial end (10) of the bearing casing (2).

8. A method as claimed in any one of the preceding claims,
characterized in that the shaft (3) is fixated by means of an additional tool with regard to the bearing casing (2) until the plastic material (12) or the metal has cured or permanently hardened.

9. A method as claimed in any one of the preceding claims,
characterized in that the annular gap (15) existing between the shaft (3) and the bearing casing (2) is sealed at least during injection moulding.

10. A wiper assembly, manufactured in particular in accordance with a method of the preceding claims, and used in particular for cleaning the windscreen of an automotive vehicle, comprising: a drive mechanism and a linkage coupled to the drive mechanism, the drive mechanism and/or the linkage being provided with at least one rotating or swinging shaft (3) supported in a casing (2), and the shaft (3) at least unilaterally rising above the casing (2) by means of a shaft portion (11), and with the shaft portion (11) being provided with an annular groove (14), characterized in that the annular groove (14) is at least sectionally injection-moulded around with a plastic material (12) or metal.

11. A wiper assembly as claimed in claim 10,
characterized in that the plastic material (12) or the metal is provided with the addition of a lubricant.

12. A wiper assembly as claimed in claim 10 or in claim 11,
characterized in that the shaft portion (11) has several annular grooves (14), in particular four annular grooves (14).

13. A wiper assembly as claimed in claim 12,
characterized in that the width of the annular grooves (14) exceeds the width of the spacings between them.

14. A wiper assembly as claimed in any one of claims 10 through 13,
characterized in that the annular groove (14) has rounded internal edges.

15. A wiper assembly as claimed in any one of claims 10 through 14,
characterized in that the annular gap (15) existing between the bearing casing (2) and the shaft (3) is sealed, for instance, by means of a washer (13) embracing the shaft (3) and resting on the front side (10) of the bearing casing (2).

16. A wiper assembly as claimed in any one of claims 10 through 15,
characterized in that the outside of the injected plastic material (12) or metal is sloped towards the shaft end, particularly so in a conical manner.

17. A wiper assembly as claimed in any one of claims 10 through 16,
characterized in that the plastic material (12) is a thermoplastic material, in particular a polyamide such as polyamide 6/12, or a duroplastic material, and in that the metal is a copper, lead and/or tin alloy.

18. A wiper assembly as claimed in any one of claims 10 through 17,
characterized in that, in cured or permanently hardened condition, the plastic material (12) or metal, respectively, forms an axial bearing and a sealing for the shaft (3).

19. A wiper assembly as claimed in any one of claims 10 through 18,
characterized in that, in the area of the axial end (10) of the bearing casing (2), the outside of the bearing casing (2) is provided with recesses filled by the injection of the plastic material (12) or metal.

20. A wiper assembly as claimed in any one of claims 10 through 19,
characterized in that additional seals such as O-rings or the like are integrated in the plastic material (12) or in the metal.

21. A wiper assembly as claimed in any one of claims 10 through 20,
characterized in that the shaft (3) is a driven shaft of a wiper motor, the shaft of a wiper bearing or the like.

## Revendications

1. Procédé d'immobilisation axiale d'un arbre (3) dans son boîtier de palier (2), dans des dispositifs d'essuyage, notamment pour le nettoyage d'une glace d'un véhicule automobile, selon lequel on ménage une gorge annulaire (14) dans la section d'arbre (11) de l'arbre (3) qui fait saillie axialement hors du boîtier de palier (2), caractérisé en ce qu'après la mise en place, et éventuellement après l'orientation d'alignement, de l'arbre (3) dans son boîtier de palier (2), on entoure la gorge annulaire (14), par injection et au moins par endroits, d'une matière plastique (12) ou d'un métal rendu plastique.

2. Procédé selon la revendication 1, caractérisé en ce qu'avant l'opération d'entourage par injection, on élève la température de l'arbre (3), notamment à une température de 200°C +/- 30°C.

3. Procédé selon la revendication 1 ou 2, caractérisé en ce qu'on applique la matière plastique (12) ou le métal, par injection, axialement et/ou radialement sur la section d'arbre (11).

4. Procédé selon l'une des revendications précédentes, caractérisé en ce qu'on applique simultanément ou successivement sur la section d'arbre (11), par injection, différentes matières plastiques (12) ou métaux.

5. Procédé selon l'une des revendications précédentes, caractérisé en ce que, pendant l'opération d'application par injection, on enveloppe et/ou recouvre la section d'arbre (11) au moins partiellement à l'aide d'un outillage, d'une façon telle qu'une cavité soit formée entre l'outillage et la section d'arbre (11).

6. Procédé selon l'une des revendications précédentes, caractérisé en ce qu'on applique la matière plastique (12) ou le métal, par injection, au moins en partie autour de l'extrémité axiale (10) du boîtier de palier (2).

7. Procédé selon l'une des revendications précédentes, caractérisé en ce qu'on introduit la matière plastique (12) ou le métal, par injection, dans des évidements prévus sur la face extérieure de l'extrémité axiale (10) du boîtier de palier (2).

8. Procédé selon l'une des revendications précédentes, caractérisé en ce qu'on immobilise l'arbre (3) vis-à-vis du boîtier de palier (2) au moyen d'un outillage supplémentaire, jusqu'à ce que la matière plastique (12) ou le métal ait durci.

9. Procédé selon l'une des revendications précédentes, caractérisé en ce qu'au moins pendant l'opération d'entourage par injection, on réalise l'étanchéité de l'intervalle annulaire (15) situé entre l'arbre (3) et le boîtier de palier (2).

10. Dispositif d'essuyage, réalisé notamment conformément à un procédé selon les revendications précédentes et servant en particulier au nettoyage d'une glace d'un véhicule automobile, comprenant un dispositif d'entraînement et un mécanisme articulé accouplé au dispositif d'entraînement, le dispositif d'entraînement et/ou le mécanisme articulé comportant au moins un arbre (3) qui est monté à palier, en rotation ou d'une manière oscillante, dans un boîtier (2) et qui fait saillie hors du boîtier (2), au moins d'un côté, par une section d'arbre (11), laquelle section d'arbre (11) comporte une gorge annulaire (14), caractérisé en ce que la gorge annulaire (14) est entourée par injection, au moins par endroits, d'une matière plastique (12) ou d'un métal.

11. Dispositif d'essuyage selon la revendication 10, caractérisé en ce que la matière plastique (12) ou le métal comporte un additif lubrifiant.

12. Dispositif d'essuyage selon la revendication 10 ou 11, caractérisé en ce que la section d'arbre (11) comporte plusieurs, notamment quatre, gorges annulaires (14).

13. Dispositif d'essuyage selon la revendication 12, caractérisé en ce que la largeur des gorges annulaires (14) est supérieure à leur espacement mutuel.

14. Dispositif d'essuyage selon l'une des revendications 10 à 13, caractérisé en ce que la gorge annulaire (14) présente des arêtes intérieures arrondies.

15. Dispositif d'essuyage selon l'une des revendications 10 à 14, caractérisé en ce que l'intervalle annulaire (15) situé entre le boîtier de palier (2) et l'arbre (3) fait l'objet d'une étanchéité, par exemple au moyen d'une rondelle (13) entourant l'arbre (3) et en appui sur la face frontale (10) du boîtier de palier (2).

16. Dispositif d'essuyage selon l'une des revendications 10 à 15, caractérisé en ce que la surface extérieure de la matière plastique (12) ou du métal d'entourage déposé par injection présente une forme chanfreinée, notamment conique, en direction de l'extrémité de l'arbre.

17. Dispositif d'essuyage selon l'une des revendications 10 à 16, caractérisé en ce que la matière plastique (12) est une matière thermoplastique, notamment un polyamide, par exemple un polyamide 6/12, ou une matière thermodurcissable, ou en ce que le métal est un alliage de cuivre, de plomb et/ou de zinc.

18. Dispositif d'essuyage selon l'une des revendications 10 à 17, caractérisé en ce que la matière plastique (12) ou le métal constitue, à l'état durci, un montage à palier axial et un moyen d'étanchéité pour l'arbre (3).

19. Dispositif d'essuyage selon l'une des revendications 10 à 18, caractérisé en ce que la surface extérieure du boîtier de palier (2) est pourvue, dans la zone de l'extrémité axiale (10) de ce boîtier de palier, d'évidements dans lesquels la matière plastique (12) ou le métal est injecté.

20. Dispositif d'essuyage selon l'une des revendications 10 à 19, caractérisé en ce que des garnitures d'étanchéité supplémentaires, telles que joints toriques ou analogues, sont intégrées dans la matière plastique (12) ou le métal.

21. Dispositif d'essuyage selon l'une des revendications 10 à 20, caractérisé en ce que l'arbre (3) est un arbre de sortie d'un moteur d'essuie-glace, l'arbre d'un palier d'essuie-glace ou analogue.
